# EUROPÄISCHE PATENTSCHRIFT

(11) **EP 0 569 412 B1**
(45) Veröffentlichungstag und Bekanntmachung des Hinweises auf die Patenterteilung: **29.09.1999**
(21) Anmeldenummer: 92903403.1
(22) Anmeldetag: 28.01.1992
(51) Int. Cl.: G11B 7/09, G11B 21/10

(54) **SPURREGELKREIS**
TRACK CONTROL CIRCUIT
CIRCUIT DE REGULATION DE SUIVI DE PISTE

(30) Priorität: 31.01.1991 DE 4102801
(43) Veröffentlichungstag der Anmeldung: 18.11.1993
(73) Patentinhaber: DEUTSCHE THOMSON-BRANDT GMBH, 78048 Villingen-Schwenningen (DE)
(72) Erfinder: BAAS, Dieter, D-7640 Kehl-Auenheim (DE)
(86) Internationale Anmeldenummer: EP9200170
(87) Internationale Veröffentlichungsnummer: WO9214240

(56) Entgegenhaltungen:
- JP-A- 1 109 577
- JP-A- 60 121 533
- JP-A- 63 148 432
- US-A- 4 630 250
- US-A- 4 677 603
- US-A- 4 731 771
- US-A- 4 736 353

## Beschreibung

Die Erfindung betrifft einen Spurregelkreis für ein einen Aufzeichnungsträger berührungslos abtastendes Aufzeichnungs- und/oder Wiedergabegerät mit einem Fein- und einem Grobantrieb zur Nachführung einer Abtastvorrichtung entlang der Datenspuren des Aufzeichnungsträgers.

CD-Spieler sind z.B. mit einem derartigen Spurregelkreis ausgerüstet.

Bei einem CD-Spieler wird ein Lichtstrahl mittels eines Fokusregelkreises auf cen Aufzeichnungsträger, die sogenannte Compact-Disc, fokussiert und mittels des Spurregelkreises entlang den Datenspuren der Platte geführt.

Der Spurregelkreis ist aus einem Grob- und einem Feinantrieb aufgebaut, der auf dem Grobantrieb befestigt ist. Der Grobantrieb kann z.B. als Spindel ausgeführt sein, die von einem Motor angetrieben wird. Deshalb ist die optische Abtastvorrichtung, die meist aus mehreren Linsen, einem Prismenstrahlteiler und einem Photodetektor aufgebaut ist, mittels des Grobantriebs in radialer Richtung bezüglich der Platte bewegbar. Ein solcher Spurregelkreis ist aus US-A-4677603 bekannt, und im Oberbegriff der unabhängige Ansprüchen 1 und 2 definiert.

Mittels des Feinantriebs ist der Lichtstrahl in radialer Richtung um etwa ± 0,5 mm bewegbar. Weil der Regelbereich des Feinantriebs deshalb nur ungefähr ± 300 Datenspuren erfaßt, muß der Grobantrieb beim Abspielen einer Platte von Zeit zu Zeit eingeschaltet werden, damit der Lichtstrahl nicht von der abzutastenden Datenspur reißt, sondern stets entlang der Datenspur geführt wird.

Ein Nachteil eines Spurregelkreises mit einem Grob- und einem Feinantrieb liegt nun darin, daß der laufende Grobantrieb mechanische Schwingungen erzeugt, die auf die optische Abtastvorrichtung übertragen weraen. Diese Schwingungen werden zwar durch den Fokusregelkreis und den Feinantrieb ausgeregelt, sc daß die Abtastung der Daten nicht durch Verlust des Fokus oder der Datenspur unterbrochen wird; wenn aber, während der Grobantrieb eingeschaltet ist, der CD-Spieler Erschütterungen oder Stößen von außen ausgesetzt ist, wie dies z.B. bei einem in einem Fahrzeug eingebauten CD-Spieler häufig der Fall ist, können sich die vom Grobantrieb verursachten Schwingungen und die Erschütterungen von außen gegenseitig verstärken. Als Folge hiervon kann es zum Spurverlust kommen; der Lichtstrahl wird von der Datenspur gerissen. Unter ungünstigen Umständen ist sogar mit Fokusverlust zu rechnen; der Fokusregelkreis vermag den Lichtstrahl nicht mehr auf die Platte zu fokussieren.

Wenn auf der Platte Fehler z.B. Kratzer oder Fingerabdrücke vorhanden sind, während der Grobantrieb läuft, kann es ebenfalls zu Spurverlust und zu Fokusverlust kommen.

Es ist daher Aufgabe der Erfindung, bei einem einen Aufzeichnungsträger berührungslos abtastenden Aufzeichnungs- und/oder Wiedergabegerät insbesondere bei Erschütterungen und bei Fehlern auf dem Aufzeichnungsträger eine sichere Abtastung der Daten zu erzielen.

Diese Erfindung löst diese Aufgabe durch die in dem Kennzeichnenden Teil der unabhängen Ansprüche 1 und 2 angegebenen Maßnahmen. Erfindung löst diese Aufgabe durch dadurch, daß das Spurfehlersignal - die Abweichung des Istwerts vom Sollwert - auf Fehler geprüft wird und bei Feststellen von Fehlern der Grobantrieb ausgeschaltet wird.

Aus JP-A-63 148 432 ist ein Spurregelkreis bekannt in den ein Grobantrieb und ein Feinantrieb parallel betrieben wird, und ein "runaway" dadurch verhindert wird, daß eine Zunahme der Spurfehlersignal über eine Vorbestimmte Referenzwert detektiert wird, und der Grobantrieb ausgeschaltet wird.

Es zeigen
- Figur 1: ein erstes Ausführungsbeispiel
- Figur 2: ein zweites Ausführungsbeispiel der Erfindung

Bei einem optischen Wiedergabegerät, z.B. bei einem CD-Spieler, wird ein die Daten abtastender Lichtstrahl auf den plattenförmigen Aufzeichnungsträger, die sogenannte Compact-Disc, mittels eines Fokusregelkreises fokussiert.

Wenn nun der Lichtstrahl z.B. infolge eines Stoßes von außen auf das Gerät von der abzutastenden Datenspur gerissen wird, steigt das Spurfehlersignal an.

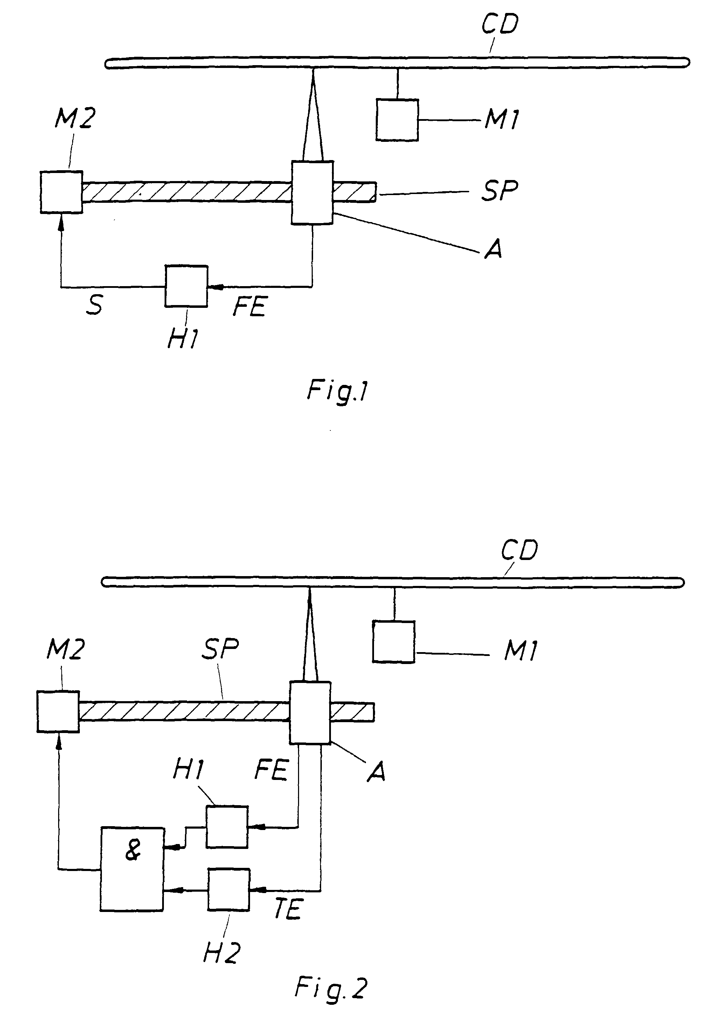

Es wird nun das erste in Figur 1 gezeigte Ausführungsbeispiel erläutert.

Die Platte CD wird von einem Motor M1 angetrieben. Der Grobantrieb ist aus einem Motor M2 und einer Spindel SP aufgebaut, auf der die optische Abtastvorrichtung A sitzt, die mittels der Spindel SP in radialer Richtung bezüglich der Platte CD bewegbar ist.

Ein Detektor H1 mißt den Pegel des Spur- oder Fokusfehlersignals. Wenn der Pegel des Spur- oder Fokusfehlersignals FE einen vorgebbaren Schwellwert W überschreitet, gibt der Detektor H1 ein Steuersignal S an den Motor M2 des Grobantriebs ab, das bei ausgeschaltetem Grobantrieb ein Einschalten des Grobantriebs verhindert und bei eingeschaltetem Grobantrieb den Grobantrieb ausschaltet.

Durch diese Maßnahme, die sicherstellt, daß der Grobantrieb in solchen kritischen Fällen ausgeschaltet bleibt, wenn Schmutz oder Kratzer auf der Platte oder Erschütterungen von außen die Abtastsicherheit beeinträchtigen, wird die Abtastsicherheit nicht mehr durch vom Grobantrieb verursachte Schwingungen zusätzlich verringert. Sobald die Störung, verursacht durch Stöße von außen oder durch Schmutz und Kratzer auf der Platte, abklingt, steigt der Pegel der HF-Schwingung im Spurfehler- und im Fokusfehlersignal wieder an. Erreicht er den vorgebbaren Pegel, so gibt der Detektor H1 den Grobantrieb M2, SP wieder frei.

Ein zweites Ausführungsbeispiel der Erfindung - in Figur 2 abgebildet - sieht vor, den Grobantrieb erst dann zu sperren, wenn sowohl der Pegel im Fokus- als auch im Spurfehlersignal unter vorgebbare Schwellwerte sinkt.

Das Fokusfehlersignal FE wird einem ersten Detektor H1 und das Spurfehlersignal TE einem zweiten Detektor H2 zugeführt. Die Ausgänge der beiden Detektoren H1 und H2 sind mit den Eingängen eines UND-Gatters U verbunden, dessen Ausgang mit dem Motor M2 des Grobantriebs verbunden ist. Im ersten Ausführungsbeispiel der Erfindung ist anstelle des UND-Gatters ein ODER-Gatter vorgesehen

Weitere Maßnahmen, um die Abtastsicherheit zu erhöhen, sehen vor, die Verstärkung im Feinantrieb oder im Fokusregelkreis zu erhöhen, wenn der Grobantrieb eingeschaltet ist. Die Verstärkung im Feinantrieb oder im Fokusregelkreis kann z.B. proportional zur vom Grobantrieb aufgenommenen Leistung gesteuert werden. Die Verstärkung der beiden Regelkreise ist dann zur Stromaufnahme des Motors M2 des Grobantriebs proportional.

Eine weitere Möglichkeit, eine Erhöhung der Abtastsicherheit zu erzielen, sieht vor, die Verstärkung im Feinantrieb oder im Fokusregelkreis nur während der Anlauf- und der Bremsphase des Grobantriebs zu erhöhen. Die Erhöhung der Verstärkung im Feinantrieb oder im Fokusregelkreis kann außerdem um die Verzögerungszeit des Grobantriebs verzögert erfolgen.

Weil die Fehler für jede Umdrehung der Platte festgestellt werden können, lassen sich die Dauer und die Periode der Fehler bestimmen. Wenn die Periode und die Dauer der Fehler einer Platte feststehen, lassen sich die Zeitintervalle voraussagen, während denen der Grobantrieb auszuschalten ist.

Um mechanische Schwingungen im Fokus- und im Spurregelkreis, die durch Trägheitskräfte verursacht werden, beim Ein- und Ausschalten des Grobantriebs zu dämpfen, werden diesen beiden Regelkreisen Kompensationsimpulse zugeführt, während der Grobantrieb ein- und ausgeschaltete wird.

Die Erfindung ist für berührungslos einen Aufzeichnungsträger abtastende Aufzeichnungs- und/oder Wiedergabegeräte geeignet, deren Spurregelkreis aus einem Grob- und einem Feinantrieb aufgebaut ist. Als Beispiele seien CD-Spieler, Videoplattenspieler, DRAW-Disc-Spieler und magneto-optische Geräte genannt.

## Patentansprüche

1. Spurregelkreis für ein einen Aufzeichnungsträger (CD) berührungslos abtastendes Aufzeichnungs- und/oder Wiedergabegerät mit einem Fein- und einem Grobantrieb (M2, SP) zur Nachführung einer Abtastvorrichtung (A) entlang den Datenspuren des Aufzeichnungsträgers (CD), wobei ein Mittel vorgesehen ist, mit dem, wenn der Pegel eines Spurfehlersignals (TE) einen vorgegebenen Schwellwert überschreitet, der Grobantrieb (M2) ausgeschaltet wird, **dadurch gekennzeichnet**, daß Züm Dämpfen mechanischer Schwingungen dem Feinantrieb beim Ausschalten ein Kompensationsimpuls zugeführt wird.

2. Spurregelkreis für ein einen Aufzeichnungsträger (CD) berührungslos abtastendes Aufzeichnungs- und/oder Wiedergabegerät mit einem Fein- und einem Grobantrieb (M2, SP) zur Nachführung einer Abtastvorrichtung (A) entlang den Datenspuren des Aufzeichnungsträgers (CD) wobei der Feinantrieb mittels des Spurfehlersignals (TE) geregelt wird, wobei ein Mittel vorgesehen ist, mit dem, wenn der Pegel eines Fokusfehlersignals (FE) einen vorgegebenen Schwellwert überschreitet, der Grobantrieb (M2) ausgeschaltet wird, **dadurch gekennzeichnet**, daß Züm Dämpfen mechanischer Schwingungen dem Feinantrieb beim Ausschalten ein Kompensationsimpuls zugeführt wird.

3. Spurregelkreis nach einem der Ansprüche 1 oder 2, dadurch gekennzeichnet, daß ein diskontinuierlich in Abhängigkeit vom Spurfehlersignal oder diskontinuierlich in Abhängigkeit von der Auslenkung des Feinantriebs eingeschalteter Grobantrieb bei Abweichungen des Istwerts vom Sollwert des Spurfehlersignals (TE) oder Fokusfehlersignals (FE) abgeschaltet wird.

4. Spurregelkreis nach einem der Ansprüche 1 bis 3, dadurch gekennzeichnet, daß der Grobantrieb wieder eingeschaltet wird, wenn der Pegel der HF-Schwingung einen vorgebbaren Wert erreicht.

5. Spurregelkreis nach Anspruch 1 oder 2, **dadurch gekennzeichnet, daß** das Spurfehlersignal (TE) oder Fokusfehlersignal (FE) einem Detektor (H1) zugeführt wird, dessen Ausgang mit dem Grobantrieb (M2) verbunden ist.

6. Spurregelkreis nach Anspruch 3, **dadurch gekennzeichnet, daß** das Fokusfehlersignal (FE) einem ersten Detektor (H1) und das Spurfehlersignal (TE) einem zweiten Detektor (H2) zugeführt werden, daß die Ausgänge der beiden Detektoren (H1, H2) mit den Eingängen eines ODER-Gatters (U) verbunden sind, und daß der Ausgang des ODER-Gatters (U) mit dem Grobantrieb (M2) verbunden ist.

7. Spurregelkreis nach Anspruch 4, **dadurch gekennzeichnet, daß** das Fokusfehlersignal (FE) einem ersten Detektor (H1) und das Spurfehlersignal (TE) einem zweiten Detektor (H2) zugeführt werden, daß die Ausgänge der beiden Detektoren (H1, H2) mit den Eingängen eines UND-Gatters (U) verbunden sind, und daß der Ausgang des UND-Gatters mit dem Grobantrieb (M2) verbunden ist.

8. Spurregelkreis nach Anspruch 1, 2, 3, 4, 5, 6 oder 7 **dadurch gekennzeichnet, daß** ein Mittel vorgesehen ist, mit dem die Verstärkung im Fokusregelkreis und/oder im Feinantrieb erhöht wird, wenn der Grobantrieb (M2) eingeschaltet ist.

9. Spurregelkreis nach Anspruch 8, **dadurch gekennzeichnet, daß** ein Mittel vorgesehen ist, mit dem die Verstärkung nur während der Anlauf- und der Bremsphase des Grobantriebs (M2) erhöht wird.

10. Spurregelkreis nach Anspruch 8 oder 9, **dadurch gekennzeichnet, daß** ein Mittel vorgesehen ist, mit dem die Verstärkung proportional zur Leistungsaufnahme des Grobantriebs (M2) erhöht wird.

11. Spurregelkreis nach Anspruch 8, 9 oder 10, **dadurch gekennzeichnet, daß** ein Mittel vorgesehen ist, mit dem die Verstärkung um die Verzögerungszeit des Grobantriebs (M2) verzögert erhöht wird.

12. Spurregelkreis nach einem oder mehreren der vorangehenden Ansprüche, **dadurch gekennzeichnet, daß** ein Mittel vorgesehen ist, mit dem für jede Umdrehung des Aufzeichnungsträgers die Bereiche, in denen Fokus- oder Spurfehlersignal oberhalb eines Schwellwertes liegen, als Fehler festgestellt werden, um die Dauer und Periode der Fehler zu bestimmen, und um aus der Dauer und der Periode der Fehler die Zeitintervalle zu ermitteln, während denen der Grobantrieb auszuschalten ist.

## Claims

1. Track control circuit for a recording and/or reproduction device which contactlessly scans a recording medium (CD), with a vernier drive and a coarse drive (M2, SP) for tracking a scanning apparatus (A) along the data tracks of the recording medium (CD), a means being provided with which, if the level of a track error signal (TE) exceeds a predetermined threshold value, the coarse drive (M2) is switched off, characterized in that, for the purpose of damping mechanical oscillations, a compensation pulse is fed to the vernier drive in the event of switching off.

2. Track control circuit for a recording and/or reproduction device which contactlessly scans a recording medium (CD), with a vernier drive and a coarse drive (M2, SP) for tracking a scanning apparatus (A) along the data tracks of the recording medium (CD), the vernier drive being controlled by means of the track error signal (TE), a means being provided with which, if the level of a focus error signal (FE) exceeds a predetermined threshold value, the coarse drive (M2) is switched off, characterized in that, for the purpose of damping mechanical oscillations, a compensation pulse is fed to the vernier drive in the event of switching off.

3. Track control circuit according to either of Claims 1 and 2, characterized in that a coarse drive which is switched on discontinuously as a function of the track error signal or discontinuously as a function of the deflection of the vernier drive is switched off in the event of deviations of the actual value from the desired value of the track error signal (TE) or focus error signal (FE) .

4. Track control circuit according to one of Claims 1 to 3, characterized in that the coarse drive is switched on again if the level of the HF oscillation reaches a predeterminable value.

5. Track control circuit according to Claim 1 or 2, characterized in that the track error signal (TE) or focus error signal (FE) is fed to a detector (H1), whose output is connected to the coarse drive (M2).

6. Track control circuit according to Claim 3, characterized in that the focus error signal (FE) is fed to a first detector (H1) and the track error signal (TE) is fed to a second detector (H2), in that the outputs of the two detectors (H1, H2) are connected to the inputs of an OR gate (U), and in that the output of the OR gate (U) is connected to the coarse drive (M2).

7. Track control circuit according to Claim 4, characterized in that the focus error signal (FE) is fed to a first detector (H1) and the track error signal (TE) is fed to a second detector (H2), in that the outputs of the two detectors (H1, H2) are connected to the inputs of an AND gate (U), and in that the output of the AND gate (U) is connected to the coarse drive (M2).

8. Track control circuit according to Claim 1, 2, 3, 4, 5, 6 or 7, characterized in that a means is provided with which the gain in the focus control circuit and/or in the vernier drive is increased if the coarse drive (M2) is switched on.

9. Track control circuit according to Claim 8, characterized in that a means is provided with which the gain is increased only during the starting phase and the braking phase of the coarse drive (M2).

10. Track control circuit according to Claim 8 or 9, characterized in that a means is provided with which the gain is increased proportionally to the power consumption of the coarse drive (M2).

11. Track control circuit according to Claim 8, 9 or 10, characterized in that a means is provided with which the gain is increased in a manner delayed by the delay time of the coarse drive (M2).

12. Track control circuit according to one or more of the preceding claims, characterized in that a means is provided with which, for each revolution of the recording medium, the areas in which focus or track error signal lie above a threshold value are ascertained as faults, in order to determine the duration and period of the faults, and in order to determine, from the duration and period of the faults, the time intervals during which the coarse drive is to be switched off.

## Revendications

1. Circuit de régulation de suivi de piste pour un appareil d'enregistrement et/ou de reproduction pouvant lire un support d'enregistrement (CD) sans contact, équipé d'un moteur de recherche de précision et d'un moteur de recherche approximative (M2, SP) permettant de restituer un dispositif de balayage (A) suivant les pistes des données du support d'enregistrement (CD), pour lequel il est prévu un dispositif permettant la mise hors circuit du moteur de recherche approximative (M2) lorsque le niveau d'un signal de défaut d'alignement (TE) dépasse une valeur prédéfinie, **caractérisé en ce qu'**une impulsion de compensation est acheminée au moteur de recherche de précision lors de la mise hors circuit, afin de réduire les oscillations mécaniques.

2. Circuit de régulation de suivi de piste pour un appareil d'enregistrement et/ou de reproduction pouvant lire un support d'enregistrement (CD) sans contact, équipé d'un moteur de recherche de précision et d'un moteur de recherche approximative (M2, SP) permettant de restituer un dispositif de balayage (A) suivant les pistes des données du support d'enregistrement (CD), pour lequel le moteur de recherche de précision est réglé au moyen du signal de défaut d'alignement (TE), pour lequel il est prévu un dispositif permettant la mise hors circuit du moteur de recherche approximative (M2) lorsque le niveau d'un signal de défaut de mise au point (FE) dépasse une valeur seuil prédéfinie, **caractérisé en ce qu'**une impulsion de compensation est acheminée au moteur de recherche de précision lors de la mise hors circuit, afin de réduire les oscillations mécaniques.

3. Circuit de régulation de suivi de piste conforme à la revendication 1 ou 2, **caractérisé en ce qu'**un moteur de recherche approximative mis en marche en discontinu en fonction du signal de défaut d'alignement ou en fonction du déréglage du moteur de recherche de précision est mis hors circuit en cas d'écarts entre la valeur effective et la valeur de consigne du signal de défaut d'alignement (TE) ou du signal de défaut de mise au point (FE).

4. Circuit de régulation de suivi de piste conforme à une des revendications 1 à 3, **caractérisé en ce que** le moteur de recherche approximative est remis en circuit lorsque le niveau de l'oscillation HF atteint une valeur que l'on peut prédéfinir.

5. Circuit de régulation de suivi de piste conforme à la revendication 1 ou 2, **caractérisé en ce que** le signal de défaut d'alignement (TE) ou le signal de défaut de mise au point (FE) est acheminé à un détecteur (H1) dont la sortie est connectée au moteur de recherche approximative (M2).

6. Circuit de régulation de suivi de piste conforme à la revendication 3, **caractérisé en ce que** le signal de défaut de mise au point (FE) est acheminé à un premier détecteur (H1) et le signal de défaut d'alignement (TE) est acheminé à un deuxième détecteur (H2) dont les sorties sont connectées aux entrées d'un élément OU (U) et dont la sortie de l'élément OU (U) est connectée au moteur de recherche approximative (M2).

7. Circuit de régulation de suivi de piste conforme à la revendication 4, **caractérisé en ce que** le signal de défaut de mise au point (FE) est acheminé à un premier détecteur (H1) et le signal de défaut d'alignement (TE) est acheminé à un deuxième détecteur (H2) dont les sorties sont connectées aux entrées d'un élément ET (U) et dont la sortie de l'élément ET est connectée au moteur de recherche approximative (M2).

8. Circuit de régulation de suivi de piste conforme à la revendication 1, 2, 3, 4, 5, 6 ou 7, **caractérisé en ce** qu'il est prévu un dispositif permettant d'augmenter l'amplification dans le circuit de régulation et/ou dans le moteur de recherche de précision lorsque le moteur de recherche approximative (M2) est mis en circuit.

9. Circuit de régulation de suivi de piste conforme à la revendication 8, **caractérisé en ce** qu'il est prévu un dispositif permettant d'augmenter l'amplification uniquement lors de la phase de démarrage et de ralentissement du moteur de recherche approximative (M2).

10. Circuit de régulation de suivi de piste conforme à la revendication 8 ou 9, **caractérisé en ce** qu'il est prévu un dispositif permettant d'augmenter l'amplification proportionnellement à la puissance absorbée du moteur de recherche approximative (M2).

11. Circuit de régulation de suivi de piste conforme à la revendication 8, 9 ou 10, **caractérisé en ce** qu'il est prévu un dispositif permettant d'augmenter l'amplification de façon retardée en fonction de la temporisation du moteur de recherche approximative (M2).

12. Circuit de régulation de suivi de piste conforme à une ou plusieurs revendications décrites ci-avant, **caractérisé en ce** qu'il est prévu un dispositif permettant de déterminer comme erreurs, pour chaque rotation du support d'enregistrement, les zones dans lesquelles les signaux de défaut de mise au point et d'alignement se situent au-dessus d'une valeur seuil, pour fixer la durée et le cycle des erreurs et pour déterminer à partir de cette durée et de ce cycle d'erreurs les intervalles de temps pendant lesquels le moteur de recherche approximative doit être mis hors circuit.
